# EUROPEAN PATENT APPLICATION

(11) **EP 4 345 461 A1**
(43) Date of publication of application: **03.04.2024**
(21) Application number: 23198949.2
(22) Date of filing: 21.09.2023
(51) Int. Cl.: G01N 35/04

(54) **DRAWER FOR BULK LIQUID SUPPLY**

(30) Priority: 27.09.2022 LU 103025
(71) Applicant: Stratec SE, 75217 Birkenfeld (DE)
(72) Inventor: Horvath, Tibor, 75217 Birkenfeld (DE); Gensheimer, Michael, 75217 Birkenfeld (DE); Kunz, Klaus, 75217 Birkenfeld (DE)
(74) Representative: Tegethoff, Sebastian

(57) **Abstract**

The invention relates to a drawer for bulk liquid supply and provides a system for receiving a plurality of containers with samples, comprising a housing which is arranged below a movable drawer, wherein the drawer comprises a frame for receiving a plurality of containers, and containers wherein the drawer comprises vertically arranged spacers on a first longitudinal inner side wall for separating the frame into compartments, wherein each compartment is configured to receive a container, and wherein the drawer is connected to the housing by two pull-out rails located on both longitudinal sides of the housing below the frame.

## Description

### Field of the Invention

The invention relates to a drawer for bulk liquid supply.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

In automated analysers, fluids for processing patient samples are supplied at various points in the analytical system. Published European Patent Application EP 2 755 034 A2 discloses a laboratory module for storing and feeding to further processing of a plurality of samples comprises at least one sample rack comprising the plurality of samples, a plurality of bays comprising a plurality of guiding rails, a transport chamber for transporting the plurality of samples to a storage location and for delivering the plurality of samples at predetermined times to a processing system. The transport chamber is adapted to accommodate the at least one sample rack, and to align with any one of the plurality of guiding rails for placing thereon or for removing therefrom the at least one sample rack. A method for storing and feeding to further processing of a plurality of samples comprises the steps of loading the plurality of samples into a laboratory module, of storing the plurality of samples, and of delivering predetermined ones of the plurality of samples at predetermined times to a processing system.

The accessibility of required fluids has a decisive influence on the process time. A flexible access of required fluids will further improve the number of processes that can be performed in an automated analyser. Despite the accessibility of the system to the fluids it is also important that a user can easily access container which contain the respective fluids.

Published U.S. patent US 11,345,946 B2 discloses a fluid container holder which includes a body having a receptacle configured to receive a container. The body has a conductive outer surface for connection to an electrical ground or voltage source, and the holder is not formed solely of an electrically conductive metal. A fluid container handling assembly includes a drawer having a holder supporting a fluid container, and a frame supporting the holder. The frame is movable between a first position providing access to the holder and a second position positioning the holder within the instrument. The assembly also includes a first lock securing the holder to the frame when the frame is at the first frame position and unlocking the holder from the frame when the frame is at the second frame position. The assembly also includes a holder transporter configured to move the holder between a first holder position and a second holder position within the instrument.

Published International application WO 2014/53193 A2 relates to a method in a mobility management node for handling information in a network. The node is associated with a wireless device being served by a serving network. The node obtains information about that at least one of the serving network, and a time zone and a UCI, has been changed for the device, and information about that the change has not been transmitted to a SGW. When at least one of the serving network and the time zone and the UCI, has been changed, and information about the change has not been transmitted to the SGW, the node transmits the information about at least one of the changed serving network and time zone and UCI, to the SGW, enabling the SGW to forward this information to a PGW.

Published U.S. patent application US 2021/356482 A1 relates to an automated assay system adapted to receive consumables in the conduct of an assay. The assay system includes at least one of a loading cart, a door support system, a waste storage unit, and a robotic subsystem. The loading cart is configured to organize and transport consumables necessary for the performance of the assay system. The door support system is configured to maintain stability of doors of the automated assay system. The waste storage unit is configured to provide convenient disposal of consumables associated with the automated assay system. The robotic subsystem is configured to transport consumables within the automated assay system.

Published U.S. patent application US 2005/268987 A1 discloses a robotic system and method that provides three axes of movement to couple a robotic arm with a desired target for movement of materials, including but not limited to fluids. The robotic arm moves in two axes of direction only, and the targets move in the third axis of direction to couple the robotic arm with the desired target. The targets are contained on trays that are controlled to move linearly to accomplish the third axis of movement. Multiple trays each containing targets are provided and are vertically stacked on top of each other to increase the target handling capacity of the robotic system without increasing the footprint size of the robotic system. Each axis of motion is accomplished by control of an actuator by a control system and associated motion controller.

None of the prior art documents provides a system allowing the flexible use of different containers in a single system providing features for avoiding monitoring fluid level and correct placement of the containers in the system.

Thus, there is a need to improve flexibility in handling fluids in automated analyser systems like diagnostic analyser, particularly fluids to be introduced into an analytical process via pumps to injectors or via pipetting.

### Summary of the Invention

The present invention provides a system for receiving a plurality of containers with samples, comprising
- a movable drawer comprising a frame for receiving a plurality of containers, wherein the drawer comprises vertically arranged spacers on a first longitudinal inner side wall for separating the frame into compartments, wherein each compartment is configured to receive a container, and wherein the drawer is connected to a housing by two pull-out rails located on both longitudinal sides of the housing below the frame of the drawer;
- the plurality of containers, wherein each container of the plurality of containers comprises
   i. two slanted corners allowing only a single orientation of the container in the compartment;
   ii. a first and a second access point for adding and removing fluids;
   iii. at their bottom surface a dome which is an inwards bent part of the container's bottom surface
- the housing which is arranged below the movable drawer, comprising an ultrasonic sensor arranged below each dome of a container of the plurality of containers.

A further aspect of the invention relates to the housing of the system which comprises a self-closing mechanism and a locking mechanism.

It is intended that the first access point can be a quick coupling connection to a suction lance inside the container.

Another aspect of the invention relates to the second access point which can have a funnel-shaped opening on an upper surface.

In an embodiment of the system, at least two containers of the plurality of containers have a different volume.

In another embodiment of the system, the at least the funnel shaped opening is surrounded by a T-shaped handle.

It is also envisaged that at least one side wall of the container comprises a recess for accommodating a spring extending from at least one of the drawer's longitudinal side walls.

The system relates also to an embodiment, wherein the housing comprises at least one light barrier for determining the drawer's position.

It is also intended that drawer and housing can be connected by an energy chain comprising individual chain links for accommodating the hoses which are connected to the quick coupling connection of the plurality of containers.

The drawer of a system according to the invention can be mounted through a damped self-closing mechanism to the housing and the drawer can be locked by a bolt when it is closed.

An automated analyser system, comprising a movable drawer comprising a frame configured for receiving a plurality of containers comprising two slanted corners allowing only a single orientation of the container in the compartment; a first and a second access point for adding and removing fluids, and at their bottom surface a dome which is an inwards bent part of the container's bottom surface, wherein the drawer comprises vertically arranged spacers on a first longitudinal inner side wall for separating the frame into compartments, wherein each compartment is configured to receive a container, and wherein the drawer is connected to a housing by two pull-out rails located on both longitudinal sides of the housing below the frame of the drawer; the housing which is arranged below the movable drawer, comprising an ultrasonic sensor arranged below each dome of a container of the plurality of containers.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows a perspective view onto a drawer with containers.
FIG. 2 shows the exterior of five containers in more detail.
FIG. 3 shows a side view (left part) and a sectional view (right part) of a container with the smaller volume from FIG. 2.
FIG. 4 shows a side view (left part) and a sectional view (right part) of a container with the bigger volume from FIG. 2.
FIG. 5 shows a sectional view through the handle of a container.
FIG. 6 shows a top view onto a drawer with containers.
FIG. 7 shows a side view onto a drawer.
FIG. 8 shows a perspective view onto a drawer.
FIG. 9 shows a side view onto the drawer.
FIG. 10 shows a sectional view of a drawer with inserted container.
FIG. 11 shows a sectional view through a drawer with containers.
FIG. 12 shows a detailed view in the self-locking mechanism.
FIG. 13 shows a top view onto a drawer with holes for an auto-teaching process.

### Detailed Description of the Invention and the Figures

The technical problem is solved by the independent claims. The dependent claims cover further specific embodiments of the invention.

The term container refers within the meaning of the present disclosure to a bottle, a vessel or any other receptacle which is appropriate for receiving a fluid. The term fluid refers to a liquid or gas which both may comprises solids. A patient sample may be any body liquid like whole blood, urine, lymph or saliva.

A drawer according to the present disclosure relates to a device comprising a drawer and its supporting assemblies like a housing and means for moving the drawer as well as sensors. A drawer according to the present disclosure is a stand-alone unit that can be mounted to a system like an automated analyser system for in vitro diagnostic purposes.

A system according to the present disclosure comprises a drawer and containers which are configured to fit into the frame of the drawer. The containers may have different volumes, but they share a number of features so that they can be inserted into the drawer's frame.

The present invention relates to a drawer for receiving containers as well as to containers with an optimised design providing the following features:
- Injectors, respectively their pumps as well as a pipettor have access to the fluid in the container.
- A liquid level detection using ultrasonic sensors.
- Possibility to place container with different sizes into the drawer.
- Locking of the containers using mechanical springs in the drawer and locking of the drawer via a bolt.

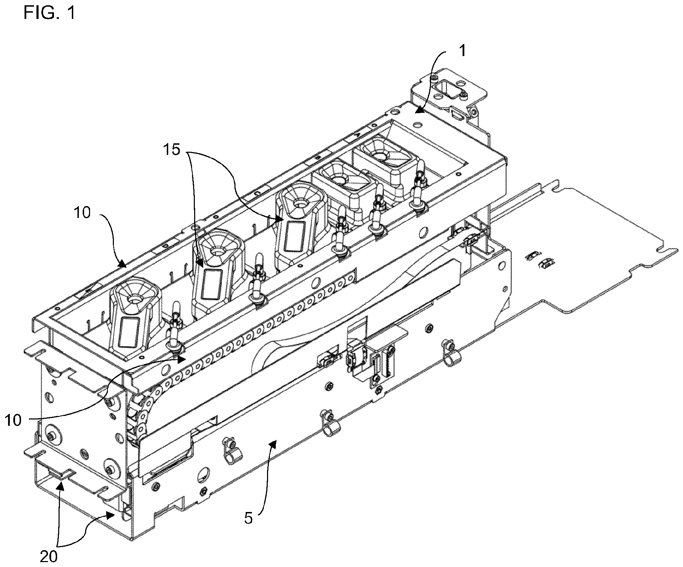

FIG. 1 shows a perspective view onto a drawer with containers. The drawer is mounted onto a housing 5 which can be firmly connected to an automated analyser by screws. The drawer 1 comprises a frame 10 with holders (not visible) for the containers 15 which comprise fluids. Drawer 1 is configured to move in housing 5, for instance by mounting it on telescopic slides, and is connected to housing 5 via two pull-out rails 20 which are located on both longitudinal sides below frame 10. The embodiment of a drawer 1 in FIG. 1 comprises five containers 15 with different volumes in frame 10.

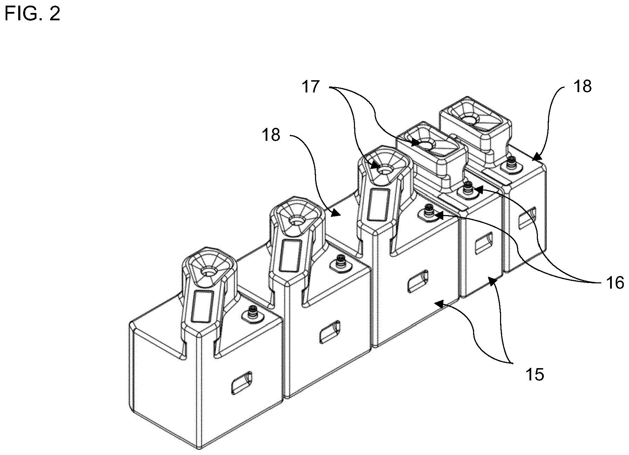

FIG. 2 shows the exterior of five containers in more detail. The two containers 15 shown on the right end of the row of containers 15 are smaller and provide thus a smaller volume, they may have for instance a capacity of 300 ml. The three containers on the left part of the row of containers 15 provide a larger volume and may have a capacity of about 650 ml. The container volume depends on the analyser or the required volumes of a specific fluid.

Regardless of the capacity of the containers 15, all containers 15 have two access points for removing a fluid from the container. The first access point to the container provides a so-called quick coupling connection 16 and the second access point is a funnel-shaped opening 17 extending from the upper side of the container 18.

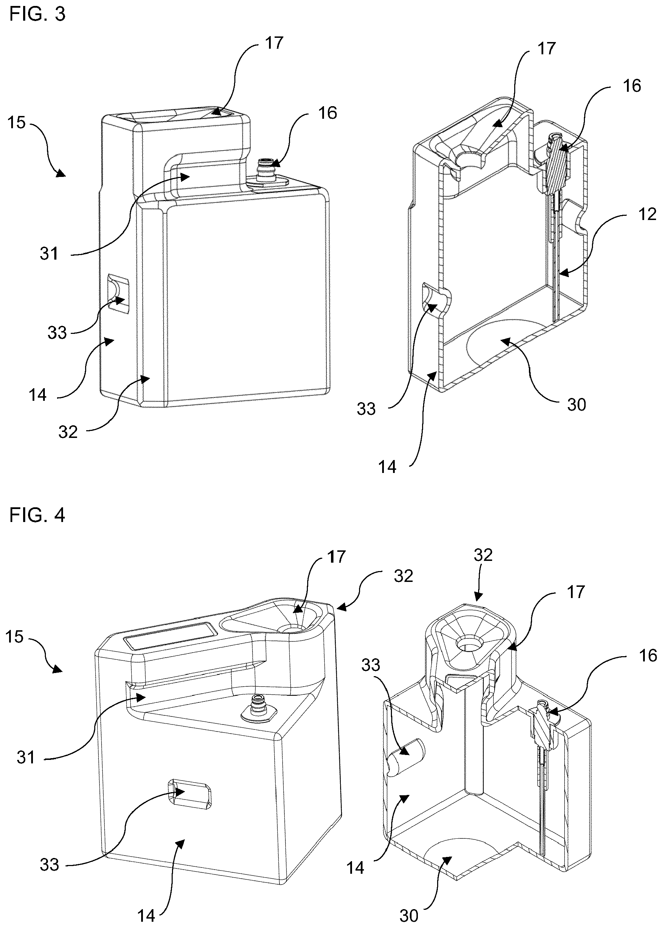

Inside the container 15, there is a suction lance 12 which is connected to the quick coupling connection 16 (comp. FIG. 3). The container 15 can be connected to an external pump (not shown) through the quick coupling connection 16. The pump transports a fluid from the container 15 via hoses (not shown) to injectors which belong to a different device. The quick coupling connector 16 allows the pump to be quickly connected to and disconnected from the container 15 so that the container 15 can be removed by the user for filling or storage, e.g. overnight in a refrigerator. Alternative connections to a pump via a thread for instance are also envisaged.

FIG. 3 shows a side view (left part) and a sectional view (right part) of a container with the smaller volume from FIG. 2.

FIG. 4 shows a side view (left part) and a sectional view (right part) of a container with the bigger volume from FIG. 2.

Referring to FIG. 3 and FIG. 4, the funnel-shaped opening 17 on the respective container 15 can be used to fill a fluid into the container 15 or to remove the fluid from the container 15 by external aspiration means like a pipettor with an aspiration probe (not shown). The aspiration probe of a pipettor enters the container 15 through container opening 17 and detects the fluid by using a capacitive liquid level detection (LLD) sensor. Once the fluid level has been detected, the pipettor removes the fluid through the aspiration probe. Since the pipettor can directly remove fluid from the container, even small volumes of fluid can be added to the analysis system. Furthermore, a higher flexibility in the analysis process is achieved.

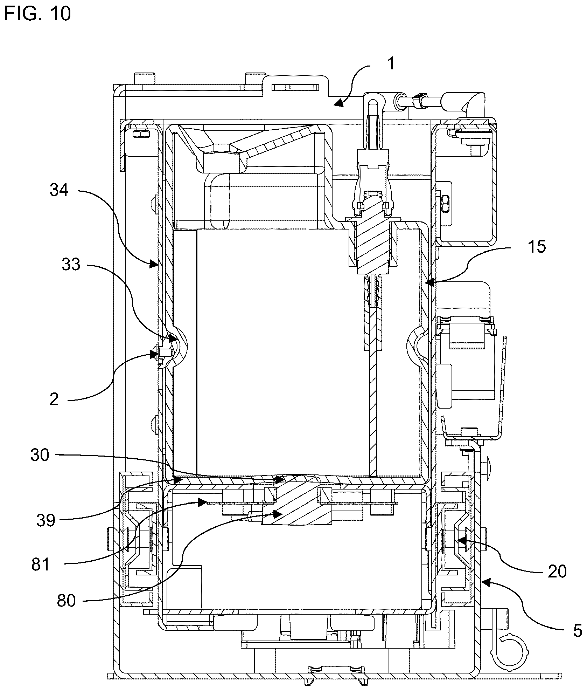

Each container comprises a dome 30 at its bottom which is a contact surface for an ultrasonic sensor (comp. FIG. 10) for fluid detection for determining the fluid level in the container 15. Each container comprises further a handle 31 as a grip for a user. Each container comprises slanted corners 32 representing a specific shape of a corner allowing only a single orientation of the container 15 in the drawer 1. A recess 33 of each container 15 on one side surface 14 serves for locking of the containers to the drawer.

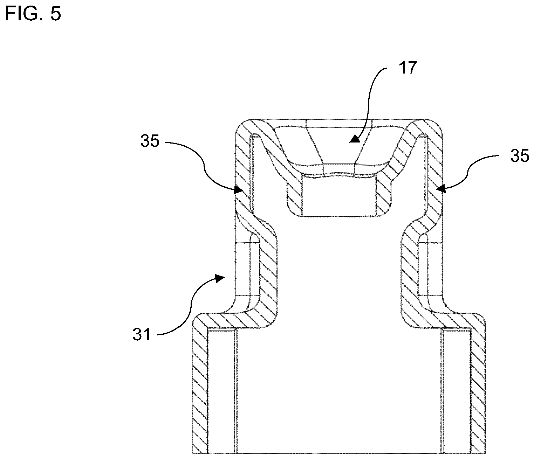

FIG. 5 shows a sectional view through the handle of a container. The handle 31 is formed by a T-shaped elevation 35 below the funnel shaped opening 17 of the container and serves as a handle for the user and enables insertion as well as removal of the container into or from the drawer (not shown).

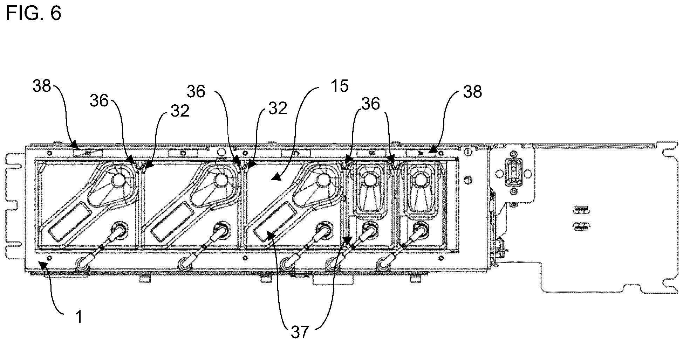

FIG. 6 shows a top view onto a drawer 1 with containers 15. To ensure an intended orientation of the container 15 when inserting it into the drawer 1, the container 15 comprises two slanted corners 32. These slanted surfaces 32 are used to code the container. The drawer 1 comprises four spacers 36 so that a single container 15 can only be inserted in a single orientation, namely with the slanted surfaces 32 facing the spacers 36. An assignment of the containers 15 in the drawer 1 is achieved by a label 37 on the containers and a label 38 on the drawer 1.

The container 15 is locked in a predefined position in the drawer 1 via the recesses 33 of the container 15. The locking with a mechanical spring 2 (comp. FIG. 10) extending from at least one of the drawer's side surfaces 34 prevents the container 15 from slipping out or tipping over when the drawer 1 is moved in and out. The lateral recesses 33 can be on both sides of the container 15, but only one recess 33 per container 15 is also sufficient.

It is to be noted that the container design allows the container to be manufactured using a powder rotational sintering process. This manufacturing process produces a watertight, seamless container with a homogeneous wall density.

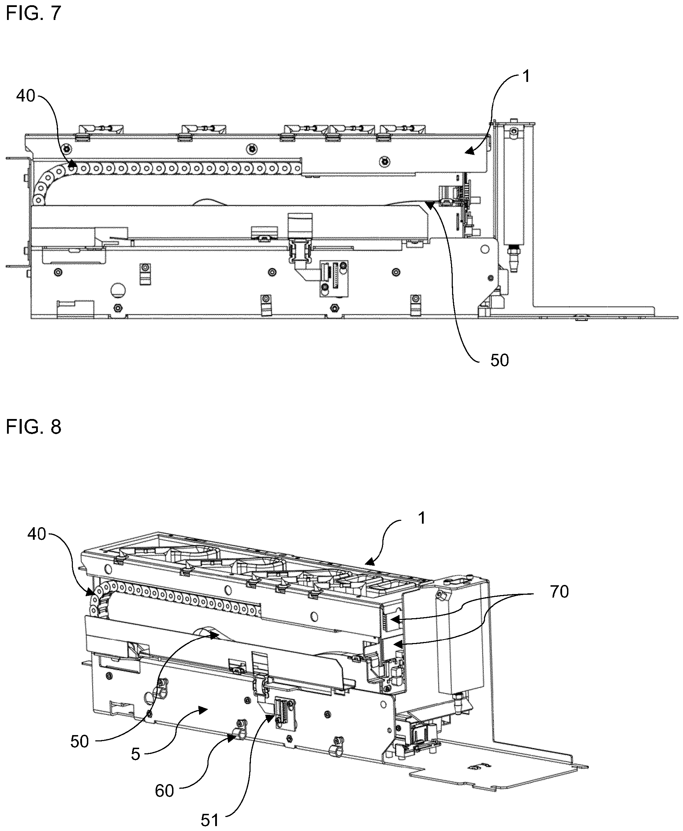

FIG. 7 shows a side view onto a drawer and FIG. 8 shows a perspective view onto a drawer. The drawer 1 comprises on a first longitudinal side a so-called energy chain 40 and the ribbon cable 50. The energy chain 40 serves as a guide for the hoses (not visible) to the containers (not visible) in the drawer 1. The energy chain 40 comprises individual chain links into which the hoses for the pumps are located. When the drawer 1 is pulled out, the energy chain 40 unrolls and when the drawer 1 is pulled in, the energy chain 40 rolls up again. The energy chain 40 serves to guarantee the smallest permissible bending radius of the hoses when the drawer 1 is retracted and extended, due to the arrangement of the chain links. The energy chain 40 protects the hoses from kinking and external damage when the drawer 1 is retracted and extended.

On the housing 5 of drawer 1 are mountings 60 for the hoses (not shown) to guide them along housing 5 to the pumps (not shown).

The printed circuit boards (PCB) 70 for the ultrasonic sensors (not shown) on the drawer 1 are connected to an external higher-level control unit via a further ribbon cable 50. The ribbon cable runs on the same side as the energy chain 40 of the drawer and provides at its end an electrical connector 51.

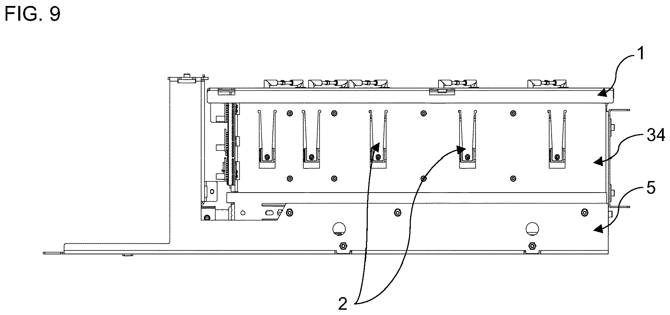

FIG. 9 shows a side view onto the drawer. The second longitudinal side surface 34 of the drawer which is opposite the first longitudinal side surface shown in FIG. 7 and FIG. 8, comprises mechanical springs 2 for locking the containers (not visible) in the drawer 1. The five mechanical springs 2 accommodate into recess 33 of each container and the number of springs 2 correspond to the number of containers that can be loaded into the drawer 1. One mechanical spring 2 is provided for each container. These mechanical springs 2 are formed and bent out of the side surface 34.

The locking of containers by means of mechanical springs guarantees a safe insertion and removal of the drawer without any container shifting out or tipping over inside the drawer. When the container is inserted manually, the mechanical spring 2 engages in the recess 33 on the side of the container. Alternatively, additional mechanical springs can be fitted on the opposite side of the drawer's housing plate. However, one mechanical spring per container is sufficient for safely extending and retracting the drawer.

FIG. 10 shows a sectional view of a drawer 1 with inserted container 15, wherein the drawer 1 is connected through the damped self-closing mechanism 19 to housing 5. The mechanical spring 2 is engaged in the lateral recess 33 of the side surface 34 of the container 15.

The bottom of the container comprises dome 30, which creates the contact surface to the ultrasonic sensor 80 of the drawer 1. The dome 30 is a slightly inwardly inclined curvature of the bottom surface 39 of container 15. The dome 30 is curved inwards so that a polished contact surface between the ultrasonic sensor 80 (sensor is slightly curved upwards) and the container 15 is as small as possible and the contact surface is not damaged when the container 15 is placed onto a flat surface like a table when filling the container with a fluid for instance.

The ultrasonic sensor 80 is in the lower area of the drawer 1 and is pressed against the contact surface of the dome 30 via metal springs 81. The ultrasonic sensor 80 determines the level of the fluid in the container 15 by means of ultrasound which is a method known to a skilled person.

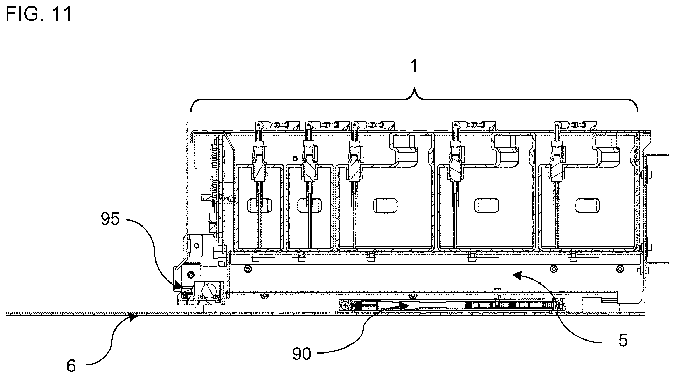

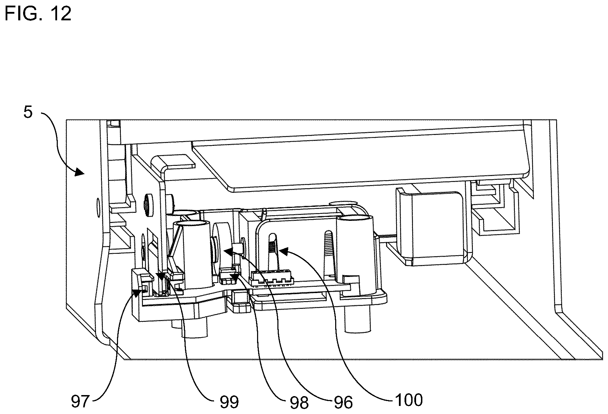

FIG. 11 shows a sectional view through a drawer with containers. FIG. 12 shows a detailed view in the self-locking mechanism.

The drawer housing 5 has a damped self-closing mechanism 90 and a locking mechanism 95. The self-closing mechanism 90 causes the drawer 1 to retract the last part of the way on its own. The damped self-closing mechanism 90 is fitted to the bottom 6 of the housing 5 on both long sides (comp. FIG. 11). When the drawer 1 is opened, the spring in the self-closing mechanism 90 is tensioned by the pin and the soft-closing mechanism is extended. When closing, the drawer 1 pulls closed with simultaneous damping. The last part of retracting the drawer 1 is closed slowly and gently. The self-closing mechanism 90 prevents the drawer 1 from being closed too quickly or too strongly by the user and fluids inside the containers from spilling out from the container.

The final position of the drawer 1 is monitored via a first light barrier 97 on the housing 5 (comp. FIG. 12). A flag 99 is located at the end of the drawer 1. When the drawer 1 closes, flag 99 interrupts the first light barrier 97 on the housing 5. When the first light barrier 97 is interrupted, the drawer is locked by a bolt 96. Bolt 96 is driven electrically via a coil 100. The position of the bolt 96 is monitored with the assistance of a second light barrier 98. If the second light barrier 98 next to the bolt is interrupted, the bolt is extended and has locked drawer 1.

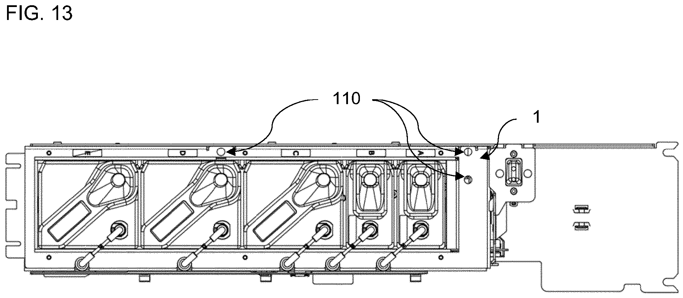

FIG. 13 shows a top view onto a drawer 1 with holes for an auto-teaching process. For the automated removal of the fluids from the containers in the drawer, the pipettor is taught via an auto-teaching process which is described in more detail in published UK patent application GB 2540646 A. The pipettor moves to the individual teaching holes 110 on the drawer 1. To determine the Z-value, the pipettor uses the capacitive Liquid Level Detection (LLD) sensor system and moves to the right of the teaching hole to make contact with the frame of the drawer. The pipettor then moves over the hole and 3 mm lower than the Z-value just determined. In the hole, the pipetting device moves in the X direction to the stop with the inside of the hole. Then it moves in the opposite X-direction to the stop with the inside of the hole. The stop is monitored via the capacitive sensor. The average value is calculated from these two determined values. The pipettor does the same with the Y-direction. This process is repeated twice to reduce measurement inaccuracies. From the four values in the X-direction and the four values in the Y-direction, the respective centre points are calculated and the two centre points (X and Y) are superimposed to calculate the central hole centre. This procedure is carried out for each of the three teaching holes. Through the taught values, the pipettor generates its coordinate system.

Capacitive LLD is used for sampling the liquid in the container. The maximum permissible Z-value of the pipettor for sampling the liquid is about 2 mm above the container floor.

The advantages of the invention can be summarized as follows:
- Increased flexibility in the module as pump and pipettor have access to the fluid in a container.
- The pipettor can sample more precise amounts of liquid which is an advantage for handling small volumes.
- The pipettor is not affected by the wash process steps.
- The pipettor can aspirate fluids directly from the container.
- Different fluids can be supplied to the system from different containers.
- The use of containers with different sizes (large and small containers) is possible.
- Due to the lower volume withdrawal by the pipettor, liquid can still be aspirated when only small amounts of liquid are present in the container so that the dead volume in the container is thus reduced.
- The device comprises an inexpensive and space-saving locking via mechanical springs.
- The detection of the fluid levels via liquid detection by ultrasound.

The drawer is not limited to the use of containers with two different sizes. It is also within the scope of the present invention to apply more than two different sizes to a drawer.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 1: drawer
- 2: spring
- 5: housing
- 6: bottom of housing
- 10: frame
- 12: suction lance
- 14: side surface container
- 15: container
- 16: quick coupling connection
- 17: funnel shaped opening
- 18: upper side container
- 20: pull-out rail
- 30: dome
- 31: handle
- 32: slanted corner
- 33: recess
- 34: side surface drawer
- 35: T-shaped elevation
- 36: space
- 37: label container
- 38: label drawer
- 39: bottom of container
- 40: energy chain
- 50: ribbon cable
- 51: electrical connector
- 60: mounting
- 70: printed circuit board (PCB)
- 80: ultrasonic sensor
- 81: metal spring
- 90: self-closing mechanism
- 95: locking mechanism
- 96: bolt
- 97: first light barrier
- 98: second light barrier
- 99: flag
- 100: coil
- 110: teaching hole

## Claims

1. A system for receiving a plurality of containers with samples, comprising
- a movable drawer comprising a frame for receiving a plurality of containers, wherein the drawer comprises vertically arranged spacers on a first longitudinal inner side wall for separating the frame into compartments, wherein each compartment is configured to receive a container, and wherein the drawer is connected to a housing by two pull-out rails located on both longitudinal sides of the housing below the frame of the drawer;
- the plurality of containers, wherein each container of the plurality of containers comprises
i. two slanted corners allowing only a single orientation of the container in the compartment;
ii. a first and a second access point for adding and removing fluids;
iii. at their bottom surface a dome which is an inwards bent part of the container's bottom surface
- the housing which is arranged below the movable drawer, comprising an ultrasonic sensor arranged below each dome of a container of the plurality of containers.

2. The system of claim 1, wherein the housing comprises a self-closing mechanism and a locking mechanism.

3. The system of claim 1 or 2, wherein the first access point is a quick coupling connection which is connected to a suction lance inside the container.

4. The system of any one of claims 1 to 3, wherein the second access point is a funnel-shaped opening on an upper surface.

5. The system of any one of claims 1 to 4, wherein at least two containers of the plurality of containers have a different volume.

6. The system of any one of claims 1 to 5, wherein at least the funnel shaped opening is surrounded by a T-shaped handle.

7. The system according to any one of claims 1 to 8 wherein at least one side wall of the container comprises a recess for accommodating a spring extending from at least one of the drawer's longitudinal side walls.

8. The system of any one of claims 1 to 7 wherein the housing comprises at least one light barrier for determining the drawer's position.

9. The system of any one of claims 1 to 8, wherein drawer and housing are connected by an energy chain comprising individual chain links for accommodating the hoses which are connected to the quick coupling connection of the plurality of containers.

10. The system of any one of claims 1 to 9, wherein the drawer is mounted through a damped self-closing mechanism to the housing.

11. The system of any one of claims 1 to 10, wherein the drawer is locked by a bolt when it is closed.

12. An automated analyser system, comprising
- a movable drawer comprising a frame configured for receiving a plurality of containers comprising
i. two slanted corners allowing only a single orientation of the container in the compartment;
ii. a first and a second access point for adding and removing fluids, and
iii. at their bottom surface a dome which is an inwards bent part of the container's bottom surface,
wherein the drawer comprises vertically arranged spacers on a first longitudinal inner side wall for separating the frame into compartments, wherein each compartment is configured to receive a container, and wherein the drawer is connected to a housing by two pull-out rails located on both longitudinal sides of the housing below the frame of the drawer;
- the housing which is arranged below the movable drawer, comprising an ultrasonic sensor arranged below each dome of a container of the plurality of containers.
